(19) Europäisches Patentamt
European Patent Office
Office européen des brevets

(11) Veröffentlichungsnummer: **0 325 672 B1**

(12) # EUROPÄISCHE PATENTSCHRIFT

(45) Veröffentlichungstag der Patentschrift: **23.10.91**

(51) Int. Cl.5: **H01M 10/10**

(21) Anmeldenummer: **88101221.5**

(22) Anmeldetag: **28.01.88**

(54) **Verfahren zum Einbringen eines aushärtenden Schwefelsäure-Elektrolyten in Akkumulatorzellen.**

(43) Veröffentlichungstag der Anmeldung:
**02.08.89 Patentblatt 89/31**

(45) Bekanntmachung des Hinweises auf die Patenterteilung:
**23.10.91 Patentblatt 91/43**

(84) Benannte Vertragsstaaten:
**DE ES FR GB IT**

(56) Entgegenhaltungen:
**DE-A- 3 539 834
GB-A- 166 707
GB-A- 571 305
US-A- 3 776 779**

(73) Patentinhaber: **DETA-Akkumulatorenwerk GmbH
Odertal 35
W-3422 Bad Lauterberg im Harz(DE)**

(72) Erfinder: **Böller, Klaus, Dr.
Blankenburger Strasse 8a
W-3360 Osterode(DE)**
Erfinder: **Pösch, Gerd, Dr.
Stieglitzweg 7
W-3422 Bad Lauterberg 5(DE)**
Erfinder: **Hoogestraat, Gerd, Dr.
Schlehenweg 8
W-3422 Bad Lauterberg(DE)**

(74) Vertreter: **Lins, Edgar, Dipl.-Phys. et al
Patentanwälte Gramm + Lins Theodor-Heuss-Strasse 2
W-3300 Braunschweig(DE)**

Rank Xerox (UK) Business Services

## Beschreibung

Die Erfindung betrifft ein Verfahren zum Einbringen eines aushärtenden Schwefelsäure-Elektrolyten in Akkumulatorzellen mit einer spezifischen Schwefelsäuredichte zwischen 1,20 und 1,31 unter Verwendung einer Wasser-in-Öl-Emulsion mit einem Polymer als Polyelektrolyten in der Wasserphase, vorzugsweise mit einem Polymer oder Copolymer eines Acrylamids, wobei die Emulsion zusammen mit einem Schwefelsäure-Kieselsäure-Gemisch zu einer Öl-in-Wasser-Emulsion invertiert und dann aushärtet.

Ein derartiges Verfahren ist durch die DE-OS 35 39 834 bekannt. Die Verwendung einer Wasser-in-Öl-Emulsion, die in eine Öl-in-Wasser-Emulsion invertiert, hat den Vorteil, daß für den Übergang von der flüssigen Phase in die ausgehärtete Phase wegen des Inversions-Zwischenschrittes eine ausreichende Zeit zur Verfügung steht, so daß der Elektrolyt im angedickten, aber noch flüssigen Zustand in die Akkumulatorzellen eingefüllt werden kann und erst nach Ablauf des Inversions-Zwischenschrittes aushärtet.

Für die praktische Anwendung dieses Verfahrens ist es nachteilig, daß das benötigte Schwefelsäure-Kieselsäure-Gemisch als Ausgangskomponente selbst kontinuierlich aushärtet, so daß seine Lagerfähigkeit relativ kurz ist.

Der Erfindung liegt daher die Aufgabe zugrunde, das Verfahren der eingangs erwähnten Art so auszugestalten, daß bei einer langen Lagerfähigkeit der Ausgangskomponente eine gute Einfüllbarkeit der hergestellten Mischung und eine sicherer Verfestigung des eingefüllten Elektrolyten erreichbar ist.

Diese Aufgabe wird erfindungsgemäß bei einem Verfahren der eingangs erwähnten Art dadurch gelöst, daß
- als erste Ausgangskomponente A Schwefelsäure, ggf. mit bis zu 3 Gew.% suspendierter Kieselsäure,
- als zweite Ausgangskomponente B eine Suspension aus Wasser und 6 - 12 Gew.% Kieselsäure und
- als dritte Ausgangskomponente C die Wasser-in-Öl-Emulsion

so eingestellt werden, daß Endkonzentrationen von 3 - 5 Gew.% Kieselsäure und 0,1 - 1,0 Gew.% Polymer entstehen und daß die Ausgangskomponenten A, B, C, praktisch gleichzeitig intensiv mit einer Mischenergie von 1 - 10 kJ/m³ gemischt werden und die Mischung sofort anschließend in die Akkumulatorzellen eingefüllt wird.

Die erfindungsgemäß verwendeten Ausgangskomponenten sind in flüssiger, ggf. etwas eingedickter Form, lange lagerfähig. Die Endkonzentrationen des eingefüllten Elektrolyts gewährleisten - zusammen mit der in die Mischung eingebrachten Mischenergie -, daß die Mischung gut einfüllbar ist und anschließend sicher in der Akkumulatorzelle aushärtet. Die Ausgangskomponente A besteht aus Schwefelsäure, der regelmäßig ein geringer Anteil Kieselsäure zugemischt worden ist. Die Höhe der Zumischung hängt von der Konzentration der verwendeten Schwefelsäure ab. Sehr stark konzentrierte Schwefelsäure verträgt keine oder nur eine geringe Zumischung von Kieselsäure, während bei einer relativ schwach konzentrierten Schwefelsäure (beispielsweise 60prozentig) die angegebene Höchstgrenze von 3 Gew.% Kieselsäure zufügbar ist, ohne daß die Ausgangskomponente A durch Aushärten an Lagerfähigkeit verlieren würde. Die Ausgangskomponenten haben vorzugsweise Viskositäten zwischen 2 und 9 mPa x s.

Die Ausgangskomponente B enthält den Rest der benötigten Kieselsäure, nämlich zwischen 6 und 12 Gew.%, die erforderlich ist, um die gewünschte Endkonzentration von 3 - 5 Gew.% Kieselsäure in dem eingefüllten Elektrolyten zu erreichen.

Die drei Ausgangskomponenten werden in einen Mischer gegeben, in dem sie praktisch gleichzeitig miteinander vermischt werden. Die in die Mischung eingebrachte Mischenergie kann durch den Druckverlust am Eingang und Ausgang des Mischers bestimmt werden.

Die Mischung der drei Ausgangskomponenten erfolgt vorzugsweise in einem Verhältnis 40 - 70 Gew.% der Ausgangskomponente A, 30 - 60 Gew.% der Ausgangskomponente B und 0,15 - 1,5 Gew.% der Ausgangskomponente C.

Für den Anwendungsfall von PzS-Batterien (Panzerplatten-Batterien) sind bevorzugte Endkonzentrationen 0,4 Gew.% für das Polymer und 4 Gew.% für die Kieselsäure, wobei die Schwefelsäuredichte auf 1,28 eingestellt wird.

Die bei der Ausgangskomponente A verwendete Schwefelsäure kann 50 - 80prozentige Schwefelsäure sein.

Bevorzugt ist eine Emulsion mit einem Polymer oder Copolymer eines Acrylamids, vorzugsweise mit einem Molekulargewicht von mindestens einer Million, und einem Polymeranteil in der Emulsion von 20 - 60 %, einer Dichte $\rho$ = 1,03 ± 0,02 g/ml und einer Viskosität $\eta$ = 300 ± 100 mPa • s.

Der Kieselsäureanteil in der ersten Ausgangskomponente A beträgt vorzugsweise 1,3 - 1,5 Gew.%, in der zweiten Ausgangskomponente B vorzugsweise 8 Gew.%, wobei in der zweiten Ausgangskomponente B vorzugsweise entmineralisiertes Wasser zur Herstellung der Suspension verwendet wird. Dabei ist eine bevorzugte Kombination 60 Gew.% Ausgangskomponente A, 39 Gew.% Ausgangskomponente B und 1 Gew.% Ausgangskomponente C.

Die verwendete Kieselsäure ist vorzugsweise pyrogenes $SiO_2$, wobei vorzugsweise Kieselsäure vom hydrophilen Typ verwendet. Der hydrophilen Kieselsäure kann dabei hydrophobe Kieselsäure mit Tensiden als Additive zugegeben werden, wie dies auch schon in der DE-OS 35 39 834 erläutert worden ist.

Ein bevorzugter Wert für die in die Mischung eingebrachte Mischenergie beträgt 2 - 5 kJ/m³, der ein optimales Verhalten der Mischung beim Einfüllen und Aushärten gewährleistet.

Die Mischung gelangt in einer zähflüssigen Form in die Akkumulatorzellen. In dieser Form neigen Flüssigkeiten dazu, Luftbläschen einzuschließen. Eingeschlossene Luftbläschen stören die Ionenleitung im Elektrolyten und sind daher unerwünscht. Erfindungsgemäß werden die Akkumulatorzellen beim Einfüllen der Mischung abwechselnd mit einem höheren und einem niedrigeren Druck beaufschlagt. Dabei wird vorzugsweise als niedrigerer Druck ein Unterdruck von 50 - 80 kPa erzeugt und zwischendurch vorzugsweise auf Atmosphärendruck belüftet. Die Wiederholfrequenz für die Erzeugung des Unterdruckes liegt dabei zwischen 0,2 und 1 Hz.

Die periodische Erzeugung eines Unterdruckes und Belüftung führt zu einer periodischen Volumenvergrößerung und -verkleinerung der Luftbläschen. Dabei wandern diese in dem zähflüssigen Elektrolyten an die Oberfläche, platzen und verschwinden beim erneuten Anlegen eines Unterdrucks.

Das Ausfüllen des Zwischenraums zwischen den Akkumulatorplatten mit dem aushärtenden Elektrolyten wird daher durch die erfindungsgemäße Maßnahme des periodischen Anlegens eines Unterdrucks wesentlich verbessert.

Das Aushärten des erfindungsgemäßen Gels geschieht innerhalb von 120 - 180 s nach Austritt aus dem Mischer. Das Einfüllen in die Akkumulatorzelle benötigt nur einen Bruchteil dieser Zeit. Das pulsierende Anlegen des Unterdruckes wird vorzugsweise noch etwa 1 Minute nach dem Abschluß des Einfüllvorganges ausgeführt.

**Patentansprüche**

1. Verfahren zum Einbringen eines aushärtenden Schwefelsäure-Elektrolyten in Akkumulatorzellen mit einer spezifischen Schwefelsäuredichte zwischen 1,20 und 1,31 unter Verwendung einer Wasser-in-Öl-Emulsion mit einem Polymer als Polyelek-trolyten in der Wasserphase, vorzugsweise mit einem Polymer oder Copolymer eines Acrylamids, wobei die Emulsion zusammen mit einem Schwefelsäure-Kieselsäure-Gemisch zu einer Öl-in-Wasser-Emulsion invertiert und dann aushärtet, dadurch gekennzeichnet, daß

- als erste Ausgangskomponente A Schwefelsäure, ggf. mit bis zu 3 Gew.% suspendierter Kieselsäure,
- als zweite Ausgangskomponente B eine Suspension aus Wasser mit 6 - 12 Gew.% Kieselsäure und
- als dritte Ausgangskomponente C die Wasser-in-Öl-Emulsion

so eingestellt werden, daß Endkonzentrationen von 3 - 5 Gew.% Kieselsäure und 0,1 - 1,0 Gew.% Polymer entstehen und daß die Ausgangskomponenten A, B, C praktisch gleichzeitig intensiv mit einer Mischenergie von 1 - 10 kJ/m³ gemischt werden und die Mischung sofort anschließend in die Akkumulatorzellen eingefüllt wird.

2. Verfahren nach Anspruch 1, dadurch gekennzeichnet, daß die Endkonzentrationen an Kieselsäure auf 4 Gew.% und für das Polymer auf 0,4 Gew.% bei einer Schwefelsäuredichte von 1,28 eingestellt werden.

3. Verfahren nach Anspruch 1 oder 2, dadurch gekennzeichnet, daß in der Ausgangskomponente A 50 - 80prozentige Schwefelsäure verwendet wird.

4. Verfahren nach einem der Ansprüche 1 bis 3, dadurch gekennzeichnet, daß die Mischung aus 40 - 70 Gew.% der Ausgangskomponente A, 30 - 60 Gew.% der Ausgangskomponente B und 0,15 - 1,5 Gew.% der Ausgangskomponente C besteht.

5. Verfahren nach einem der Ansprüche 1 bis 5, dadurch gekennzeichnet, daß eine Emulsion verwendet wird, der als Polyelektrolyt ein Polymer oder Copolymer eines Acrylamids enthalten ist und die einen Polymeranteil in der Emulsion von 20 - 60 %, eine Dichte von $\rho = 1,03 \pm 0,02$ g/ml und eine Viskosität $\eta = 300 \pm 100$ mPa · s aufweist.

6. Verfahren nach Anspruch 5, dadurch gekennzeichnet, daß das Polymer oder Copolymer des Acrylamids ein Molekulargewicht von mindestens 1.000.000 aufweist.

7. Verfahren nach einem der Ansprüche 1 bis 6, dadurch gekennzeichnet, daß der Kieselsäureanteil in der ersten Ausgangskomponente A mit 1,3 - 1,5 Gew.% gewählt wird.

8. Verfahren nach einem der Ansprüche 1 bis 7, dadurch gekennzeichnet, daß für die zweite Ausgangskomponente B entmineralisiertes Wasser verwendet wird.

9. Verfahren nach einem der Ansprüche 1 bis 8, dadurch gekennzeichnet, daß der Kieselsäureanteil in der zweiten Ausgangskomponente B 8 Gew.% beträgt.

10. Verfahren nach einem der Ansprüche 6 bis 9, dadurch gekennzeichnet, daß der Polymeranteil in der Emulsion 40 Gew.% beträgt.

11. Verfahren nach einem der Ansprüche 1 bis 10, dadurch gekennzeichnet, daß die verwendete Kieselsäure pyrogenes $SiO_2$ ist.

12. Verfahren nach Anspruch 11, dadurch gekennzeichnet, daß Kieselsäure vom hydrophilen Typ verwendet wird.

13. Verfahren nach den Ansprüche 5 bis 12, gekennzeichnet durch 60 Gew.% der Ausgangskomponente A, 39 Gew.% der Ausgangskomponente B und 1 Gew.% der Ausgangskomponente C.

14. Verfahren nach Anspruch 12 oder 13, dadurch gekennzeichnet, daß der hydrophilen Kieselsäure Kieselsäure vom hydrophoben Typ mit Tensiden als Additiv zugegeben wird.

15. Verfahren nach einem der Ansprüche 1 bis 14, dadurch gekennzeichnet, daß die Mischenergie für die Mischung der Ausgangskomponenten A, B, C 2 - 5 $kJ/m^3$ beträgt.

16. Verfahren nach einem der Ansprüche 1 bis 15, dadurch gekennzeichnet, daß beim Einfüllen der Mischung in die Akkumulatorzellen diese abwechselnd mit einem höheren und einem niedrigeren Druck beaufschlagt werden.

17. Verfahren nach Anspruch 16, dadurch gekennzeichnet, daß der niedrigere Druck ein Unterdruck ist.

18. Verfahren nach Anspruch 17, dadurch gekennzeichnet, daß die Akkumulatorzellen nach der Beaufschlagung mit einem Unterdruck jeweils auf Atmospährendruck belüftet werden.

19. Verfahren nach Anspruch 17 oder 18, dadurch gekennzeichnet, daß ein Unterdruck von 50 - 80 kPa erzeugt wird.

20. Verfahren nach einem der Ansprüche 17 bis 19, dadurch gekennzeichnet, daß die Wiederholfrequenz für die Erzeugung des Unterdrucks zwischen 0,2 und 1 Hz liegt.

**Claims**

1. Process for introducing a hardening sulphuric acid electrolyte into accumulator cells, with a specific density of sulphuric acid between 1.20 and 1.31, using a water-in-oil emulsion with a polymer as the polyelectrolyte in the water phase, preferably with a polymer or copolymer of an acrylic amide, the emulsion, together with a sulphuric acid/silicic acid mixture, inverting to give an oil-in-water emulsion and then hardening, characterized in that
   - as the first starting component A, sulphuric acid, where appropriate with up to 3% by weight of suspended silicic acid,
   - as the second starting component B, a suspension of water with 6 - 12% by weight of silicic acid, and
   - as the third starting component C, the water-in-oil emulsion
   are adjusted such that final concentrations of 3 - 5% by weight of silicic acid and 0.1 - 1.0% by weight of polymer are produced, and in that the starting components A, B, C are mixed virtually simultaneously intensively at a mixing energy of 1 - 10 $kJ/m^3$ and the mixture is then put immediately into the accumulator cells.

2. Process according to Claim 1, characterized in that the final concentrations of silicic acid are set to 4% by weight and for the polymer to 0.4% by weight with a sulphuric acid density of 1.28.

3. Process according to Claim 1 or 2, characterized in that 50 - 80% strength sulphuric acid is used in the starting component A.

4. Process according to one of Claims 1 to 3, characterized in that the mixture comprises 40 - 70% by weight of the starting component A, 30 - 60% by weight of the starting component B and 0.15 - 1.5% by weight of the starting component C.

5. Process according to one of Claims 1 to 4, characterized in that an emulsion is used in which a polymer or copolymer of an acrylic amide is contained as the polyelectrolyte and which has a polymer portion of 20 - 60% in the emulsion, a density of $\rho = 1.03 \pm 0.02$ g/ml and a viscosity of $\eta = 300 \pm 100$ mPa $\cdot$ s.

6. Process according to Claim 5, characterized in that the polymer or copolymer of the acrylic amide has a molecular weight of at least 1,000,000.

7. Process according to one of Claims 1 to 6, characterized in that the silicic acid portion in the first starting component A is selected as 1.3 to 1.5% by weight.

8. Process according to one of Claims 1 to 7, characterized in that demineralized water is used for the second starting component B.

9. Process according to one of Claims 1 to 8, characterized in that the silicic acid portion in the second starting component B is 8% by weight.

10. Process according to one of Claims 6 to 9, characterized in that the polymer portion in the emulsion is 40% by weight.

11. Process according to one of Claims 1 to 10, characterized in that the silicic acid used is pyrogenic $SiO_2$.

12. Process according to Claim 11, characterized in that silicic acid of the hydrophilic type is used.

13. Process according to Claims 5 to 12, characterized by 60% by weight of starting component A, 39% by weight of starting component B and 1% by weight of starting component C.

14. Process according to Claim 12 or 13, characterized in that there is added to the hydrophilic silicic acid silicic acid of the hydrophobic type with surfactants as additive.

15. Process according to one of Claims 1 to 14, characterized in that the mixing energy for the mixture of starting components A, B, C is 2 - 5 $kJ/m^3$.

16. Process according to one of Claims 1 to 15, characterized in that when the mixture is put into the accumulator cells these are acted upon by a higher and a lower pressure alternately.

17. Process according to Claim 16, characterized in that the lower pressure is a partial vacuum.

18. Process according to Claim 17, characterized in that after being acted upon by a partial vacuum, the accumulator cells are in each case pressurized to atmospheric pressure.

19. Process according to Claim 17 or 18, characterized in that a partial vacuum of 50 - 80 kPa is produced.

20. Process according to one of Claims 17 to 19, characterized in that the repetition frequency for producing the partial vacuum is between 0.2 and 1 Hz.

**Revendications**

1. Procédé d'introduction dans des éléments d'accumulateur d'un éléctrolyte constitué d'un acide sulfurique solidifiant, ayant une densité spécifique de l'acide sulfurique comprise entre 1,20 et 1,31, en utilisant une émulsion eau-dans-huile avec un polymère comme polyélectrolyte dans la phase aqueuse, de préférence avec un polymère ou un copolymère d'un acrylamide, l'émulsion étant inversée en même temps qu'un mélange acide sulfurique-acide silicique pour donner une émulsion huile-dans-eau, puis solidifiée, caractérisé en ce que l'on utilise

   - comme premier constituant initial A un acide sulfurique, de préférence avec 1 à 3 % en poids d'acide silicique en suspension,
   - comme second constituant initial B une suspension d'eau avec 6 à 12 % en poids d'acide silicique, et
   - comme troisième constituant initial C l'émulsion eau-dans-huile, ajusté de telle sorte que l'on ait des concentrations finales de 3 à 5 % en poids d'acide silicique et de 0,1 à 1,0 % en poids de polymère, et que les constituants initiaux A, B et C soient mélangés énergiquement d'une manière pratiquement simultanée avec une énergie de mélange de 1 à 10 $kJ/m^3$ et que le mélange soit introduit ensuite immédiatement dans les éléments d'accumulateur.

2. Procédé selon la revendication 1, caractérisé en ce que les concentrations finales en acide sulfurique sont ajustées à 4 % en poids, et pour le polymère à 0,4 % en poids pour une densité de l'acide sulfurique de 1,28.

3. Procédé selon la revendication 1 ou 2, caractérisé en cequ'on utilise dans le constituant initial A de l'acide sulfurique à 50 à 80 %.

4. Procédé selon l'une des revendications 1 à 3, caractérisé en ce que le mélange se compose de 40 à 70 % en poids du constituant initial A, de 30 à 60 % en poids du constituant initial B et de 0,15 à 1,5 % en poids du constituant initial C.

5. Procédé selon l'une des revendications 1 à 4, caractérisé en ce que l'on utilise une émulsion contenant comme polyéctrolyte un un polymère ou un copolymère d'un acrylamide, et qui présente une proportion de polymère dans l'émulsion de 20 à 60 %, une densité de $\rho$ 1,03 ± 0,02 g/ml et une viscosité de $\eta = 300 \pm 100$ mPa.s.

6. Procédé selon la revendication 5, caractérisé en ce que le polymère ou copolymère de l'acrylamide présente une masse moléculaire d'au moins 1.000.000.

7. Procédé selon l'une des revendications 1 à 6, caractérisé en ce que la proportion d'acide silicique dans le premier constituant initial A est fixée à 1,3 - 1,5 % en poids.

8. Procédé selon l'une des revendications 1 à 7, caractérisé en ce qu'on utilise pour le second constituant de départ B de l'eau déminéralisée.

9. Procédé selon l'une des revendications 1 à 8, caractérisé en ce que la proportion d'acide silicique dans le second constituant initial B est de 8 % en poids.

10. Procédé selon l'une des revendications 6 à 9, caractérisé en ce que la proportion de polymère dans l'émulsion est de 40 % en poids.

11. Procédé selon l'une des revendications 1 à 10, caractérisé en ce que l'acide silicique utilisé est du $SiO_2$ obtenu par pyrogénation.

12. Procédé selon la revendication 11, caractérisé en ce qu'on utilise un acide silicique du type hydrophile.

13. Procédé selon les revendications 5 à 12, caractérisé par des concentrations de 60 % en poids du constituant initial A, 39 % en poids du constituant initial B et 1 % en poids du constituant initial C.

14. Procédé selon la revendication 12 ou 13, caractérisé en ce qu'on ajoute à l'acide silicique hydrophile un acide silicique du type hydrophobe avec des agents tensio-actifs comme additifs.

15. Procédé selon l'une des revendications 1 à 4, caractérisé en ce que l'énergie de mélange pour le mélange des constituants initiaux A, B, C est de 2 à 5 kJ/m³.

16. Procédé selon l'une des revendications 1 à 15, caractérisé en ce que, lors de l'introduction du mélange dans les éléments d'accumulateur, celui-ci est soumis alternativement à une pression plus élevée et plus faible.

17. Procédé selon la revendication 16, caractérisé en ce que la pression la plus faible est une dépression.

18. Procédé selon la revendication 17, caractérisé en ce que les éléments d'accumulateur, après avoir été soumis à une dépression, sont ventilés à chaque fois à la pression atmosphérique.

19. Procédé selon la revendication 17 ou 18, caractérisé en ce que l'on produit une dépression de 50 à 80 kPa.

20. Procédé selon l'une des revendications 17 à 19, caractérisé en ce que la fréquence de répétition pour la production de la dépression est comprise entre 0,2 et 1 Hz.